# EUROPÄISCHE PATENTANMELDUNG

(11) **EP 1 295 850 A1**
(43) Veröffentlichungstag der Anmeldung: **26.03.2003**
(21) Anmeldenummer: 02017057.7
(22) Anmeldetag: 27.07.2002
(51) Int. Cl.: C01B 33/193, C08K 3/36, B60C 1/00, C09C 1/30

(54) **Fällungskieselsäure mit hohem BET/CTAB-Verhältnis**

(30) Priorität: 20.09.2001 DE 10146325
(71) Anmelder: Degussa AG, 40474 Düsseldorf (DE)
(72) Erfinder: Uhrlandt, Stefan, Dr., 53859 Niederkassel (DE); Thoma, Herbert, 53913 Swissttal (DE); Schmoll, Ralf, Dr., 53125 Bonn (DE); Blume, Anke, Dr., 53919 Weilerswist (DE); Luginsland, Detlef, Dr., 50968 Köln (DE)

(57) **Zusammenfassung**

Die vorliegende Erfindung betrifft eine Fällungskieselsäure, die ein besonders hohes BET/CTAB-Verhältnis aufweist, ein Verfahren zu deren Herstellung und deren Verwendung in Elastomerenmischungen.

## Beschreibung

Die vorliegende Erfindung betrifft eine Fällungskieselsäure, die ein besonders hohes BET/CTAB-Verhältnis aufweist, ein Verfahren zu deren Herstellung und deren Verwendung.

Der Einsatz von Fällungskieselsäuren in Elastomerenmischungen wie Reifen ist lange bekannt. An Kieselsäuren, die in Reifen eingesetzt werden, werden hohe Anforderungen gestellt. Sie sollen leicht und gut im Kautschuk dispergierbar sein, eine gute Verbindung mit denen im Kautschuk enthaltenen Polymerketten bzw. den übrigen Füllstoffen eingehen und einen hohen, russähnlichen Abriebwiderstand aufweiten. Neben der Dispergierbarkeit der Kieselsäure sind daher die spezifischen Oberflächen (BET oder CTAB) und die Ölaufnahmekapazität (DBP) wichtig. Die spezifischen Oberflächen sind ein Maß für die innere und äußere Struktur der Kieselsäure. Da diese beiden Methoden unterschiedlich große Moleküle als Adsorbat einsetzen, liefert das Verhältnis dieser beiden Oberflächenkennzahlen (d. h. der Quotient BET/CTAB-Oberfläche) einen Hinweis auf die Porengrößenverteilung der Kieselsäure und das Verhältnis von "äußerer" zu "innerer" Oberfläche der Kieselsäure. Die Oberflächeneigenschaften von Kieselsäuren bestimmen maßgeblich deren mögliche Anwendung, bzw. bestimmte Anwendungen einer Kieselsäure (z. B. Trägersysteme oder Füllstoffe für Elastomerenmischungen) verlangen bestimmte Oberflächeneigenschaften.

So offenbart US 6 013 234 die Herstellung von Fällungskieselsäure mit einer BET- und CTAB-Oberfläche jeweils von 100 bis 350 m²/g. Diese Kieselsäure ist besonders zu Einarbeitung in Elastomerenmischungen geeignet, wobei die BET/CTAB-Verhältnisse zwischen 1 und 1,5 liegen. In EP 0 937 755 werden verschiedene Fällungskieselsäuren offenbart, die eine BET-Oberfläche von ca. 180 bis ca. 430 m²/g und eine CTAB-Oberfläche von ca. 160 bis 340 m²/g besitzen. Diese Kieselsäuren sind besonders als Trägermaterial geeignet und weisen ein BET- zum CTAB-Verhältnis von 1,1 bis 1,3 auf. EP 0 647 591 offenbart eine Fällungskieselsäure, die ein Verhätnis von BET- zu CTAB-Oberfläche von 0,8 bis 1,1 aufweist, wobei diese Oberflächenkennzeichen Absolutwerte von bis zu 350 m²/g annehmen können. In EP 0 643 015 wird eine Fällungskieselsäure, die als Abrasiv- und/oder Verdickungskomponente in Zahnpasten eingesetzt werden kann, vorgestellt, die eine BET-Oberfläche von 10 bis 130 m²/g und eine CTAB-Oberfläche von 10 bis 70 m²/g, d. h. ein BET- zu CTAB-Verhältnis von ca. 1 bis 5,21 aufweist.

Es wurde nun gefunden, das eine Fällungskieselsäure, die sehr unterschiedliche BET- und CTAB-Oberflächen bei gleichzeitig eingehaltenen Minimalwerten für diese Kennzahlen aufweisen, besonders gut als Füllstoff in Elastomerenmischungen geeignet ist.

Gegenstand der vorliegenden Erfindung, sind daher Fällungskieselsäuren, deren BET-Oberfläche über 135 m²/g, CTAB-Oberfläche über 75 m²/g liegt, wobei das Verhältnis der BET- und CTAB-Oberfläche ≥ 1,7 ist.

Die erfindungsgemäßen Fällungskieselsäuren können eine maximale BET-Oberfläche von 600 m²/g und/oder eine maximale CTAB-Oberfläche von 350 m²/g aufweisen.

Weiterhin können die Fällungskieselsäuren durch eine DBP-Aufnahme von 100-350 g/100 g, durch einen wk-Koeffizient von ≤ 3.4 (Verhältnis der Peakhöhe der durch Ultraschall nicht abbaubaren Partikel im Größenbereich 1,0 - 100 µm zur Peakhöhe der abgebauten Partikel im Größenbereich < 1,0 µm) und/oder eine Searszahl von 5-25 ml gekennzeichnet sein.

Das Verhältnis der BET/CTAB-Oberfläche der erfindungsgemäßen Fällungskieselsäure liegt bevorzugt in den folgenden Bereichen:

| BET [m²/g] | CTAB [m²/g] | Verhältnis BET/CTAB |
|---|---|---|
| 140 | 80 | 1,75 |
| 180 | 100 | 1,8 |
| 215 | 113 | 1,90 |
| 250 | 125 | 2 |
| 292 | 129 | 2,26 |
| 300 | 100 | 3 |
| 336 | 143 | 2,35 |
| 344 | 168 | 2,05 |
| 350 | 200 | 1,75 |
| 400 | 150 | 2,67 |
| 450 | 200 | 2,25 |
| 500 | 280 | 1,79 |
| 550 | 280 | 1,96 |
| 600 | 200 | 3 |

Ein weiterer Gegenstand der vorliegenden Erfindung ist ein Verfahren zur Herstellung einer Fällungskieselsäure mit einer
BET-Oberfläche ≥ 135 m²/g und einer
CTAB-Oberfläche ≥ 75 m²/g,
mit einem Verhältnis der BET-/CTAB-Oberflächen ≥ 1.7, wobei
a) eine wässrige Wasserglaslösung vorgelegt wird
b) in diese Vorlage unter Rühren bei 55 - 95 °C für 10-60 Minuten gleichzeitig Wasserglas und Schwefelsäure dosiert,
c) die Zudosierung für 30-90 Minuten unter Einhaltung der Temperatur gestoppt,
d) bei gleicher Temperatur unter Rühren für 20-80 Minuten gleichzeitig Wasserglas und Schwefelsäure zudosiert
e) mit Schwefelsäure auf einen pH-Wert von ca. 3,5 angesäuert und
f) filtriert und getrocknet wird.

Die in den Schritten b) und d) zugeführten Komponenten können jeweils gleiche oder unterschiedliche Konzentrationen und/oder Zuflußgeschwindigkeiten aufweisen. In einer Verfahrensvariante ist die Konzentration der eingesetzten Komponenten in beiden Schritten gleich, jedoch beträgt die Zuflußgeschwindigkeit der Komponenten in Schritt d) 125 - 140 % der Zuflußgeschwindigkeit in Schritt b).

Neben Wasserglas (Natriumsilikat-Lösung) können auch andere Silikate wie Kalium- oder Calziumsilikat verwendet werden. Anstelle von Schwefelsäure können auch andere Säuerungsmittel wie HCl, HNO₃ oder CO₂ eingesetzt werden.

Die physikalisch/chemischen Daten der erfindungsgemäßen Fällungskieselsäuren werden mit den folgenden Methoden bestimmt:
- BET-Oberfläche: Areameter, Fa. Ströhlein, gemäß ISO 5794/Annex D
- CTAB-Oberfläche: bei pH 9, gemäß Janzen und Kraus in Rubber Chemistry and Technology 44 (1971) 1287
- DBP-Zahl: ASTM 2414-88

Die Filtration und Trocknung der erfindungsgemäßen Kieselsäuren sind dem Fachmann geläufig und können z. B. in den o. g. Patenten nachgelesen werden. Bevorzugt wird die Fällungskieselsäure durch Sprühtrocknung (im Düsenturm), einem Etagentrockner, einem Flash- oder Spin-Flash-Trockner getrocknet. Die Sprühtrocknung kann z. B. gemäß US 4 097 771 durchgeführt werden. Hier wird im Düsenturm-Trockner eine Fällungskieselsäure erzeugt, die in Partikelform mit einem mittleren Durchmesser von über 80, insbesondere über 90, besonders bevorzugt über 200 µm erhalten wird.

Die erfindungsgemäßen Kieselsäuren können daher als Füllstoffe in Elastomerenmischungen, insbesondere für Reifen verwendet werden.

Weiterhin können die erfindungsgemäßen Kieselsäuren in allen Anwendungsgebieten verwendet werden, in denen üblicherweise Kieselsäuren eingesetzt werden, wie z. B. in Batterieseparatoren, Anti-Blocking-Mittel, Mattierungsmittel in Lacken, Papierstrichen oder Entschäumer.

Ein weiterer Gegenstand der Erfindung sind Elastomerenmischungen, vulkanisierbare Kautschukmischungen oder sonstige Vulkanisate sowie Reifen, die die erfindungsgemäße Kieselsäure enthalten.

Optional kann die erfindungsgemäße Kieselsäure mit Silanen oder Organosilanen der Formeln I bis III modifiziert werden

[R¹ ₙ-(RO)₃₋ₙSi-(Alk)ₘ-(Ar)ₚ]_{q}[B] (I),

R¹ ₙ-(RO)₃₋ₙSi-(Alkyl) (II),

oder

R¹ ₙ(RO)₃₋ₙSi-(Alkenyl) (III),

in denen bedeuten
- B:: -SCN, -SH, -Cl, -NH₂ (wenn q = 1) oder -Sx- (wenn q = 2),
- R und R¹:: eine Alkylgruppe mit 1 bis 4 Kohlenstoffatomen, den Phenylrest, wobei alle Reste R und R¹ jeweils die gleiche oder eine verschiedene Bedeutung haben können.
- R:: eine C₁-C₄-Alkyl, -C₁-C₄-Alkoxygruppe,
- n:: 0; 1 oder 2,
- Alk:: einen zweiwertigen unverzweigten oder verzweigten Kohlenwasserstoffrest mit 1 bis 6 Kohlenstoffatomen,
- m:: 0 oder 1,
- Ar:: einen Arylenrest mit 6 bis 12 C-Atomen, bevorzugt 6 C-Atome,
- p:: 0 oder 1 mit der Maßgabe, dass p und n nicht gleichzeitig 0 bedeuten,
- x:: eine Zahl von 2 bis 8,
- Alkyl:: einen einwertigen unverzweigten oder verzweigten gesättigten Kohlenwasserstoffrest mit 1 bis 20 Kohlenstoffatomen, bevorzugt 2 bis 8 Kohlenstoffatomen,
- Alkenyl:: einen einwertigen unverzweigten oder verzweigten ungesättigten Kohlenwasserstoffrest mit 2 bis 20 Kohlenstoffatomen, bevorzugt 2 bis 8 Kohlenstoffatomen.

Die Modifizierung der Fällungskieselsäure mit Organosilanen kann in Mischungen von 0,5 bis 50 Teilen, bezogen auf 100 Teile Fällungskieselsäure, insbesondere 1 bis 15 Teile, bezogen auf 100 Teile Fällungskieselsäure erfolgen, wobei die Reaktion zwischen Fällungskieselsäure und Organosilan während der Mischungsherstellung (in situ) oder außerhalb durch Aufsprühen und anschließendes Tempern der Mischung oder durch Mischen des Silans und der Kieselsäuresuspension mit anschließender Trocknung und Temperung durchgeführt wird.

In einer bevorzugten Ausführungsform der Erfindung kann als Silan das Bis(triethoxysilylpropyl)-tetrasulfan eingesetzt werden.

Die erfindungsgemäße Kieselsäure kann in Elastomerenmischungen, Reifen oder vulkanisierbaren Kautschukmischungen als Verstärkerfüllstoff in Mengen von 5 bis 200 Teilen, bezogen auf 100 Teile Kautschuk als Pulver, Mikroperlen oder Granulat sowohl mit Silanmodifizierung als auch ohne Silanmodifizierung eingemischt werden.

Die Zugabe eines oder mehrerer der oben genannten Silane kann zusammen mit den erfindungsgemäßen Kieselsäuren zum Elastomeren erfolgen, wobei die Reaktion zwischen Füllstoff und Silan während des Mischprozesses bei erhöhten Temperaturen abläuft (in-situ-Modifizierung) oder in bereits vormodifizierter Form (zum Beispiel DE-PS 40 04 781), das heißt, beide Reaktionspartner werden außerhalb der eigentlichen Mischungsherstellung zur Reaktion gebracht.

Neben Mischungen, die ausschließlich die erfindungsgemäßen Kieselsäuren, mit und ohne Organosilane gemäß Formeln I bis III als Füllstoffe enthalten, können die Elastomeren zusätzlich mit einem oder mehreren mehr oder weniger verstärkenden Füllstoffen gefüllt sein. In erster Linie gebräuchlich wäre hier ein Verschnitt zwischen Rußen (zum Beispiel Furnace-, Gas-, Flamm-, Acetylenruße) und den erfindungsgemäßen Kieselsäuren, mit und ohne Silan, aber auch zwischen Naturfüllstoffen, wie zum Beispiel Clays, Kieselkreide, weiteren kommerziellen Kieselsäuren und den erfindungsgemäßen Kieselsäuren.

Das Verschnittverhältnis richtet sich auch hier, wie bei der Dosierung der Organosilane, nach dem zu erzielenden Eigenschaftsbild der fertigen Gummimischung. Ein Verhältnis von 5 - 95 % zwischen den erfindungsgemäßen Kieselsäuren und den anderen oben genannten Füllstoffen ist denkbar und wird in diesem Rahmen auch realisiert.

Neben den erfindungsgemäßen Kieselsäuren, den Organosilanen und anderen Füllstoffen bilden die Elastomere einen weiteren wichtigen Bestandteil der Kautschukmischung. Die erfindungsgemäßen Kieselsäuren können in allen mit Beschleuniger/Schwefel, aber auch peroxidisch vernetzbaren Kautschukarten, eingesetzt werden. Zu nennen wären hierbei Elastomere, natürliche und synthetische, ölgestreckt oder nicht, als Einzelpolymer oder Verschnitt (Blend) mit anderen Kautschuken, wie zum Beispiel Naturkautschuke, Butadienkautschuke, Isoprenkautschuke, Butadien-Styrol-Kautschuke, insbesondere SBR, hergestellt mittels des Lösungspolymerisationsverfahrens, Butadien-Acrylnitrilkautschuke, Butylkautschuke, Terpolymere aus Ethylen, Propylen und nicht konjugierte Diene. Ferner kommen für Kautschukgemische mit den genannten Kautschuken die folgenden zusätzlichen Kautschuke in Frage:
Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Ethylen-Propylen-Copolymere, gegebenenfalls auch chemische Derivate des Naturkautschuks sowie modifizierte Naturkautschuke.

Ebenso bekannt sind die üblichen weiteren Bestandteile wie Weichmacher, Stabilisatoren, Aktivatoren, Pigmente, Alterungsschutzmittel und Verarbeitungshilfsmittel in den üblichen Dosierungen.

Die erfindungsgemäßen Kieselsäuren, mit und ohne Silan, finden Einsatz in allen Gummianwendungen, wie zum Beispiel Reifen, Fördergurte, Dichtungen, Keilriemen, Schläuche, Schuhsohlen etc.

Ein weiterer Gegenstand der Erfindung sind Elastomerenmischungen, insbesondere vulkanisierbare Kautschukmischungen, die die erfindungsgemäßen Kieselsäuren in Mengen von 5 bis 200 Teilen, bezogen auch 100 Teile Elastomer bzw. Kautschuk enthalten. Die Einarbeitung dieser Kieselsäure und die Herstellung der dieses Kieselsäure enthaltenden Mischungen erfolgt in der in der Gummiindustrie üblichen Art und Weise auf einem Innenmischer oder Walzwerk. Die Darreichungs- bzw. Einsatzform kann sowohl als Pulver, Mikroperlen oder Granulat erfolgen. Auch hier unterscheiden sich die erfindungsgemäßen Kieselsäuren nicht von den bekannten hellen Silikatfüllstoffen.

Zur Erzielung eines guten Wertebildes in einer Polymermischung ist die Dispersion der Fällungskieselsäure in der Matrix, dem Polymer, von entscheidender Bedeutung.

Es hat sich gezeigt, dass der wk-Koeffizient ein Maß für die Dispergierbarkeit einer Fällungskieselsäure ist.
Der wk-Koeffizient wird wie folgt bestimmt:
Die Messung beruht auf dem Prinzip der Laserbeugung. Dabei wird mit einem Coulter LS 230 gemessen.

Zur Bestimmung werden 1,3 g der Fällungskieselsäure in 25 ml Wasser überführt und 4,5 min mit Ultraschall bei 100 W (90 % gepulst) behandelt. Danach wird die Lösung in die Meßzelle überführt und eine weitere Minute mit Ultraschall behandelt.

Die Detektion mit Hilfe zweier sich in einem unterschiedlichen Winkel zur Probe befindlichen Laserdioden erfolgt während der Ultraschallbehandlung. Nach dem Prinzip der Lichtbeugung werden die Laserstrahlen gebeugt. Das entstehende Beugungsbild wird rechnergestützt ausgewertet. Die Methode ermöglicht es, über einen weiteren Meßbereich (ca. 40 nm- 500 µm) die Partikelgrößenverteilung zu bestimmen.

Ein wesentlicher Punkt hierbei ist, dass der Energieeintrag durch Ultraschall eine Simulation des Energieeintrags durch mechanische Kräfte in industriellen Mischaggregaten der Reifenindustrie darstellt.

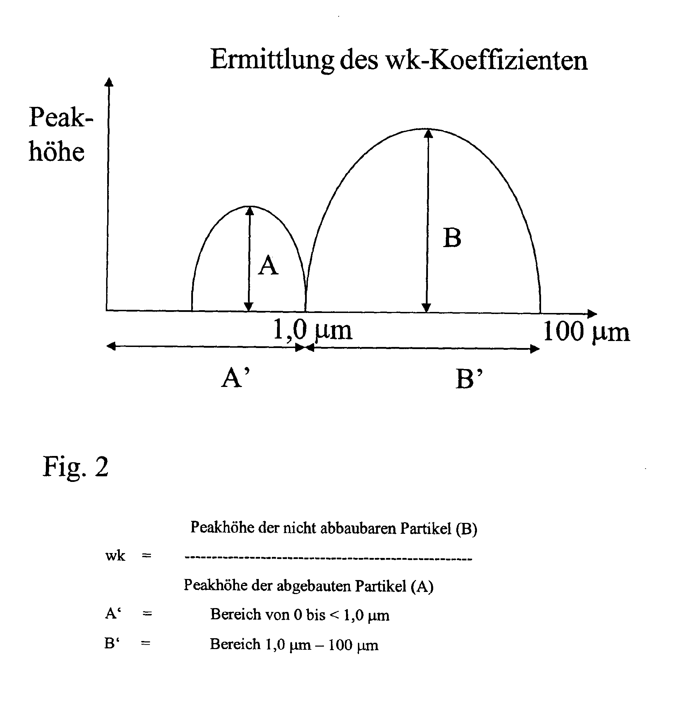

Fig. 2 ist eine schematische Darstellung der für die Berechnung des wk-Koeffizienten nötigen Werte.

Die Kurven zeigen im Bereich um 1,0 - 100 µm ein erstes Maximum in der Partikelgrößenverteilung und im Bereich < 1,0 µm ein weiteres Maximum. Der Peak im Bereich 1,0 - 100 µm gibt den Anteil an unzerkleinerten Kieselsäurepartikeln nach der Ultraschallbehandlung an. Diese recht groben Partikel werden in den Kautschukmischungen schlecht dispergiert. Der zweite Peak mit deutlich kleineren Partikelgrößen (< 1,0 µm) gibt denjenigen Teil an Partikeln der Kieselsäure an, der während der Ultraschallbehandlung zerkleinert worden ist. Diese sehr kleinen Partikel werden in Kautschukmischungen ausgezeichnet dispergiert.

Der wk-Koeffizient ist nun das Verhältnis der Peakhöhe der nicht abbaubaren Partikel (B), deren maximum im Bereich 1,0 - 100 µm (B') liegt, zur Peakhöhe der abgebauten Partikel (A), deren Maximum im Bereich < 1,0 µm (A') liegt.

Der wk-Koeffizient ist damit eine Maß für die "Abbaubarkeit" (=Dispergierbarkeit) der Fällungskieselsäure. Es gilt, eine Fällungskieselsäure ist umso leichter dispergierbar, je kleiner der wk-Koeffizient ist, d. h. je mehr Partikel bei der Einarbeitung in Kautschuk abgebaut werden.

Die erfindungsgemäßen Kieselsäuren haben wk-Koeffizienten < 3,4. Das Maximum in der Partikelgrößenverteilung der nicht abbaubaren Partikel der erfindungsgemäßen Fällungskieselsäure liegt im Bereich 1,0 - 100 µm. Das Maximum in der Partikelgrößenverteilung der abgebauten Partikel der erfindungsgemäßen Fällungskieselsäure liegt im Bereich < 1,0 µm. Bekannte Fällungskieselsäure haben deutlich höhere wk-Koeffizienten und andere Maxima in den Partikelgrößenverteilungen gemessen mit dem Coulter LS 230 und sind somit schlechter dispergierbar.

Die folgenden Beispiele sollen die Erfindung näher erläutern, ohne ihren Umfang zu beschränken.

### Beispiel 1

In einem Reaktor werden 401 Wasser sowie 4,3 Liter Wasserglas (Dichte 1,348, 27,0 % SiO2, 8,05 % Na₂O) vorgelegt. Anschließend werden bei 75 °C für 35 min. 8,6 l/h Wasserglas und 1,6 l/h Schwefelsäure (96%, Dichte 1,400) zudosiert. Nach 35 Min. wird die Zugabe für 60 min. unterbrochen und danach wieder aufgenommen, wobei nun für 50 Min. 11,9 l/h Wasserglas und 2,3 l/h Schwefelsäure o.a. Qualität zudosiert werden. Anschließend wird die Wasserglaszugabe gestoppt und die Schwefelsäure weiter zugeführt, bis ein pH von ca. 3,5 erreicht. ist. Das erhaltene Produkt wird wie üblich filtriert und anschließend einer Kurzzeittrocknung unterworfen. Das erhaltene Produkt weist eine BET-Oberfläche von 215 m²/g und eine CTAB-Oberfläche von 113 m²/g auf.

### Beispiel 2

Die für die Kautschukmischungen verwendete Rezeptur ist in der folgenden Tabelle 1 angegeben. Dabei bedeutet die Einheit phr Gewichtsanteile bezogen auf 100 Teile des eingesetzten Rohkautschuks. Das allgemeine Verfahren zur Herstellung von Kautschukmischungen und deren Vulkanisate ist in dem folgenden Buch beschrieben: "Rubber Technology Handbook", W. Hofmann, Hanser Verlag 1994.

**Tabelle 1**

| Substanz | Referenz [phr] | Beispiel [phr] |
|---|---|---|
| **1. Stufe** | | |
| Buna VSL 5025-1 | 96 | 96 |
| Buna CB 24 | 30 | 30 |
| Ultrasil 7000 GR | 80 | -- |
| Erfindungsgemäße Kieselsäure | | 80 |
| ZnO | 3 | 3 |
| Stearinsäure | 2 | 2 |
| Naftolene ZD | 10 | 10 |
| Vulkanox 4020 | 1.5 | 1.5 |
| Protector G35P | 1 | 1 |
| X 50-S | 12.8 | 12.8 |

| **2. Stufe** | | |
|---|---|---|
| Batch Stufe 1 | | |
| **3. Stufe** | | |
| Batch Stufe 2 | | |
| Vulkacit D | 2 | 2 |
| Perkacit TBzTD | 0.2 | 0.2 |
| Vulkacit CZ | 1.5 | 1.5 |
| Schwefel | 1.5 | 1.5 |

Bei dem Polymer VSL 5025-1 handelt es sich um ein in Lösung polymerisiertes SBR-Copolymer der Bayer AG mit einem Styrolgehalt von 25 gew.-% und einem Butadiengehalt von 75 Gew.-%. Von dem Butadien sind 73 % 1,2, 10 % cis-1,4 und 17 % trans-1,4 verknüpft. Das Copolymer enthält 37,5 phr Öl und weist eine Mooney-Viskosität (ML 1+4/100 °C) von 50 ± 4 auf.

Bei dem Polymer Buna CB 24 handelt es sich um ein cis 1,4 Polybutadien der Bayer AG mit cis 1,4-Gehalt von 97 %, einem trans 1,4-Gehalt von 2 %, einem 1,2-Gehalt von 1 % und einer Mooney-Viskosität von 44 ± 5.

Als aromatisches Öl wurde Naftolen ZD der Chemetall verwendet; bei Vulkanox 4020 handelt es sich um 6PPD der Bayer AG und Protektor G35P ist ein Ozonschutzwachs der HB-Fuller GmbH. Vulkacit D (DPG) und Vulkacit CZ (CBS) sind Handelsprodukte der Bayer AG. Perkacit TBzTD ist von der Flexsys erhältlich.

Das Kopplungsreagenz X50-D ist eine 50/50 Abmischung von Si 69 der Degussa AG und dem Ruß N 330. Ultrasil 7000 GR ist eine leicht dispergierbare gefällte Kieselsäure der Degussa AG mit einer BET-Oberfläche von 170 m²/g.

Die Gummimischungen wurden gemäß der in Tabelle 2 wiedergegebenen Mischvorschrift hergestellt.

**Tabelle 2**

| **Stufe 1** | |
|---|---|
| **Einstellungen** | |
| Mischaggregat | Werner & Pfleiderer N-Typ |
| Drehzahl | 70 min-1 |
| Stempeldruck | 5.5. bar |
| Leervolumen | 1.6 L |
| Füllgrad | 0.73 |
| Durchflußtemperatur | 70 °C |

| **Mischvorgang** | |
|---|---|
| 0 bis 1 min | BUNA VSL 5025-1 + Buna CB 24 |
| 1 bis 3 min | ½ Kieselsäure, X50-S |
| 3 bis 5 min | ½ Kieselsäure, Rest der Chemikalien 1. Stufe |
| 4 min | Säubern |
| 4 bis 5 min | Mischen und ausfahren |
| Batch-Temperatur | 145 - 150 °C |
| Lagerung | 24 h bei Raumtemperatur |

| **Stufe 2** | |
|---|---|
| **Einstellungen** | |
| Mischaggregat | Wie in Stufe 1 bis auf: |
| Drehzahl | 80 min-1 |
| Durchflußtemperatur | 80 °C |
| Füllgrad | 0.70 |

| **Mischvorgang** | |
|---|---|
| 0 bis 2 min | Batch Stufe 1 aufbrechen |
| 2 bis 5 min | Batchtemperatur 150 °C durch Drehzahlvariation halten |
| 5 min | Ausfahren |
| Batch-Temperatur | 150 °C |
| Lagerung | 24 h bei Raumtemperatur |

| **Stufe 3** | |
|---|---|
| **Einstellungen** | |
| Mischaggregat | wie in Stufe 1 bis auf |
| Drehzahl | 40 min⁻¹ |
| Füllgrad | 0.69 |
| Durchflußtemperatur | 50 °C |

| **Mischvorgang** | |
|---|---|
| 0 bis 2 min | Batch Stufe 2, Beschleuniger, Schwefel |
| 2 min | ausfahren und auf Labormischwalzwerk Fell bilden |
| | (Durchmesser 200 mm, Länge 450 mm, Durchflußtemperatur 50 °C) |
| | Homogenisieren: |
| | 3* liks, 3* rechts einschneiden und umklappen sowie 10* bei weitem Walzenspalt (3,5 mm) stürzen |
| | Fell ausziehen. |
| Batch-Temperatur | 85 - 95 °C |

In Tabelle 3 sind die Methoden für die Gummitestung zusammengestellt.

**Tabelle 3**

| Physikalische Testung | Norm/Bedingungen |
|---|---|
| ML 1+4, 100 °C, 3. Stufe | DIN 53523/3, ISO 667 |
| Vulkameterprüfung, 165 °C | DIN 53529/3, ISO 6502 |
| Dmax - Dmin [dNm] | |
| t10 % und t90 % [min] | |
| Zugversuch am Ring, 23 °C | DIn 53504, ISO 37 |
| Spannungswerte [MPa] | |
| Bruchdehnung[%] | |
| Shore-A-Härte, 23 °C [SH] | DIN 53 505 |
| Viskoelastische Eigenschaften, | DIN 53 513, ISO 2856 |
| 0 und 60 °C, 16 Hz, 50 N Vorkraft | |
| und 25 N Amplitudenkraft | |
| Speichermodul E* [MPa] | |
| Verlustfaktor tan δ [] | |
| Goodrich-Flexometer, Wärmeaufbau | DIN 53533, ASTM D 623 A |
| 25 min, 0,25 inch Hub | |
| Innentemperatur [°C] | |
| Permanet Set [%] | |
| Ball Rebound, 23 °C, 60 °C [%] | ASTM D 5308 |
| DIN-Abrieb, 10 N Kraft [mm³] | DIN 53 516 |

Die gummitechnischen Ergebnisse der Referenzmischung mit Ultrasil 7000 GR und der erfindungsgemäßen Kieselsäure gemäß Beispiel 1 sind in Tabelle 4 vergleichend gegenübergestellt.

**Tabelle 4:**

| Ergebnisse gummitechnischen Prüfung | | | |
|---|---|---|---|
| | | Ref. | Bsp. |
| ML 1+4 | [ME] | 63 | 67 |
| Dmax-Dmin | [dNm] | 18,4 | 17,5 |
| t 10% | [min] | 1,3 | 2,2 |
| t 90 % | [min] | 6,2 | 5,6 |
| t 90 % - t 10 % | [min] | 4,9 | 3,4 |
| Shore-A-Härte | [SH] | 67 | 66 |
| Spannungswert 100 % | [MPa] | 2,1 | 2,9 |
| Spannungswert 300 % | [MPa] | 10,3 | 11,8 |
| Bruchdehnung | [%] | 390 | 320 |
| DIN-Abrieb | [mm³] | 77 | 85 |
| Ball-Rebound 60 °C | [%] | 54,9 | 64,8 |
| Wärmeaufbau | [°C] | 111 | 90 |
| Permanent Set | [%] | 5,9 | 1,9 |
| E* (0 °C) | [MPa] | 25,4 | 16,9 |
| tan δ (0 °C) | [] | 0,471 | 0,396 |
| E* (60 °C) | [MPa] | 8,9 | 8,5 |
| tan δ (60 °C) | [] | 0,128 | 0,095 |

Wie man anhand der Daten in Tabelle 1 sieht, liegen die Viskositäten ML 1+4 der beiden Mischungen trotz der stark unterschiedlichen CTAB-Oberflächen auf vergleichbarem Niveau, was eine gute Verarbeitbarkeit der erfindungsgemäßen Kieselsäure erwarten läßt.

Die Scorch-Zeit t 10 % ist für die Beispielmischung vorteilhafterweise verlängert und die Vernetzungsgeschwindigkeit t 90 % - t 10 % erhöht.

Zudem zeichnet sich die Beispelmischung durch höhere Spannungswerte bei ähnliche Shore-A-Härte aus, obwohl die CTAB-Oberfläche der erfindungsgemäßen Kieselsäure deutlich geringer ist, als vom Ultrasil 7000 GR. Dem Fachmann ist bekannt, dass nur eine Erhöhung der CTAB-Oberfläche der Kieselsäure bereits zu höheren Viskositäten und Shore-A-Härten führt. Die erfindungsgemäße Kieselsäure mit dem hohen BET/CTAB-Oberflächenverhältnis besitzt demnach ein ausgezeichnetes Verstärkungsverhalten.

Anhand der dynamischen Daten erkennt man deutliche Vorteile der erfindungsgemäßen Kieselsäure hinsichtlich des Hystereseverlustes. Gegenüber der Referenzmischung ist in der Beispielmischung der Ball-Rebound 60 °C erhöht, der Wärmeaufbau im Goodrich-Flexometer erniedrigt und auch der tan δ 60 °C vorteilhafterweise erniedrigt, was einen reduzierten Rollwiderstand in einer Reifenlaufflächenmischung erwarten läßt.

In den Beispielen 3 und 4 wurden folgende Stoffe eingesetzt:
- Krynol 1712: Styrol-Butadien-Kautschuk auf Basis Emulsionspolymerisation
- Buna VSL 5025-0: Styrol-Butadien-Kautschuk auf Basis Lösungspolymerisation
- Buna CB 10: Butadienkautschuk
- SMR 10: Naturkautschuk, ML(1+4) = 60-70
- X 50 S: 50:50 Verschnitt aus Si69/bis(3-triethoxysilylpropyl)tetrasulfan
- Corax N 375: Standardruß
- ZnO RS: Zinkoxid

| Stearinsäure | |
|---|---|
| Naftolen | aromatisches Öl |
| Protektor G35P | Ozonschutzwachs |
| Lipoxol 4000 | Polyethylenglykol |
| Vulkanox 4020 | N-(1,3-Dimethylbutyl)-N'-phenyl-p-phenylendiamin |
| Vulkanox HS/LG | 2,2,4-Trimethyl-1,2-dihydrochinolin, oligomerisiert |
| DPG | Diphenylguanidin |
| CBS | N-Cyclohexyl-2-benzthiazylsulfenamid |
| ZBEC | Zinkdibenzyldithiocarbamat |
| Schwefel | |

### Beispiel 3

Erfindungsgemäße Fällungskieselsäure im Vergleich der Standard-Kieselsäure Ultrasil GR (Degussa AG) in einer reinen E-SBR-Mischung (Angaben in phr):

| | VN2 | Kieselsäure gemäß Beispiel 1 |
|---|---|---|
| Krynol 1712 | 137,5 | 137,5 |
| Ultrasil VN2 GR | 50 | - |
| Erfindungsgemäße Kieselsäure | - | 50 |
| X 50 S | 3 | 3 |
| ZnO RS | 3 | 3 |
| Stearinsäure | 1 | 1 |
| Vulkanox 4020 | 2 | 2 |
| Lipoxol 4000 | 1,5 | 1,5 |
| DPG | 1,5 | 1,5 |
| CBS | 1,5 | 1,5 |
| Schwefel | 2,2 | 2,2 |
| Vulkanisatdaten: 160°C | | |
| t₉₀-t₁₀ [%] | 4,7 | 4,4 |
| Modul 100 % [MPa] | 1,1 | 1,5 |
| Modul 300 % [MPa] | 4,8 | 5,8 |
| E* 60 °C | 5,4 | 6,2 |
| tanδ 60°C | 0,085 | 0,085 |
| E* 0 °C | 7,9 | 8,9 |
| Dispersion, Peakfläche Topographie | 3,9 | 2,0 |
| Dispersion, Anzahl Peaks 2-5 µm | 32 | 26 |
| Naßrutschen LAT 100 Rating [%] | 100 | 106 |
| (Mittelwerte der Temperaturauswertung) | | |

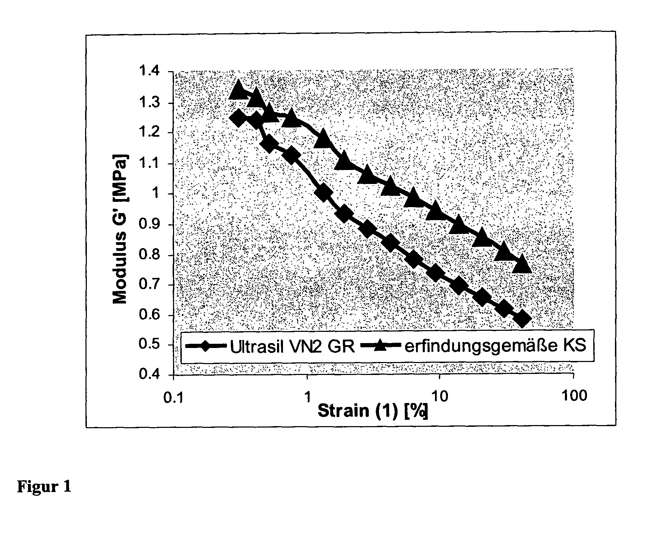

Fig. 1 zeigt die RPA-Kurven der erfindungsgemäßen Kieselsäure (KS) im Vergleich zu der Standardkieselsäure Ultrasil VN2 GR

Die erfindungsgemäße Kieselsäure führt gegenüber der Standardkieselsäure Ultrasil VN2 GR zu höheren Moduliwerten, höheren E* Werten und einer deutlich verbesserten Dispersion (was einem besseren Abriebverhalten entspricht). In den in Fig. 1 dargestellten RPA Kurven zeigt sich, daß der Einsatz der erfindungsgemäßen Kieselsäure sowohl zu einem höheren Füllstoff-Füllstoff-Netzwerk als auch zu einer deutlich höheren Füllstoff-Polymer-Wechselwirkung führt, was bedeutet, daß die erfindungsgemäße Kieselsäure ein deutlich besseres Verstärkungsverhalten aufweist. Desweiteren führt der Einsatz der erfindungsgemäßen Kieselsäure ein deutlich verbessertes Naßrutschverhalten gegenüber der Standardkieselsäure Ultrasil VN2 GR auf.

### Beispiel 4

Erfindungsgemäße Fällungskieselsäure im Vergleich der Standard-Kieselsäure Ultrasil VN2 GR in einer Winterreifen-Mischung (Angaben in phr):

| | 1 | 2 |
|---|---|---|
| | | |

| | | |
|---|---|---|
| Buna VSL 5025-0 | 40 | 40 |
| Buna CB 10 | 45 | 45 |
| SMR 10 | 15 | 15 |
| Ultrasil VN2 GR | 70 | - |
| Erfindungsgemäße Kieselsäure | - | 70 |
| X 50 S | 6 | 6 |
| Corax N 375 | 20 | 20 |
| ZnO RS | 3 | 3 |
| Stearinsäure | 2 | 2 |
| Vulkanox 4020 | 1 | 1 |
| Naftolen ZD | 35 | 35 |
| Protektor G35P | 1,5 | 1,5 |
| Vulkanox HS/LG | 1 | 1 |
| DPG | 1,7 | 1,7 |
| CBS | 1,7 | 1,7 |
| ZBEC | 0,1 | 0,1 |
| Schwefel | 1,4 | 1,4 |
| Vulkanisatdaten: 160°C | | |
| t₉₀ [%] | 6,5 | 6,9 |
| Modul 100 % [MPa] | 1,7 | 2,2 |
| Modul 300 % [MPa] | 7,5 | 8,1 |
| Shore Härte | 64 | 64 |
| E* 60 °C | 9,3 | 9,8 |
| tanδ 60°C | 0,201 | 0,188 |
| 1/E* -20 °C | 1,5 | 2,3 |
| tanδ -20°C | 0,426 | 0,474 |
| Dispersion, Peakfläche Topographie | 1,2 | 1,8 |
| Permanent Set [%] | 13,8 | 10,9 |
| Heat Build up [°C] | 154 | 145 |

Die erfindungsgemäße Kieselsäure führt gegenüber der Standardkieselsäure Ultrasil VN2 GR zu höheren Moduliwerten, zu einem niedrigerem heat build up (was einer höheren Lebensdauer entspricht), zu gleich guten Dispersionswerten, zu höheren E* Werten, einem niedrigerem tand 60°C (was einem verbesserten Rollwiderstand entspricht) und einem höheren 1/E* bei -20°C (Compliance), was einem verbesserten Schneegriff entspricht.

### Beispiel 5:

In einem Reaktor werden 40 l Wasser sowie 4,6 l Wasserglas (Dichte 1,348, 27 % SiO₂, 8,05 % Na₂O) vorgelegt. Anschließend werden bei 70 °C für 35 Min. 8,7 l/h Wasserglas und 1,7 l/h Schwefelsäure (96 %, Dichte 1,400) zudosiert. Nach 35 Min. wird die Zugabe für 60 Min. unterbrochen und danach wieder aufgenommen, wobei nun fr 50 Min. 11,9 l/h Wasserglas und 2,4 l/h Schwefelsäure o. a. Qualität zudosiert werden. Anschließend wird die Wasserglaszugabe gestoppt und Schwefelsäure weiter zugeführt, bis ein pH von ca. 3,5 erreicht ist. Das erhaltene Produkt wird wie üblich filtriert und anschließend einer Kurzzeittrocknung unterworfen. Das erhaltene Produkt weist eine BET-Oberfläche von 292 m²/g und eine CTAB-Oberfläche von 129 m²/g auf.

Das BET/CTAB-Verhältnis beträgt 2,26.

### Beispiel 6:

Wie Beispiel 5, wobei die Temperatur 65 °C beträgt. Das erhaltene Produkt weist eine BET-Oberfläche von 336 m²/g und eine CTAB-Oberfläche von 143 m²/g auf.

Das BET/CTAB-Verhältnis beträgt 2,35.

### Beispiel 7:

Wie Beispiel 5, wobei die Temperatur 60 °C beträgt. Das erhaltene Produkt weist eine BET-Oberfläche von 344 m²/g und eine CTAB-Oberfläche von 168 m²/g auf.

Das BET/CTAB-Verhältnis beträgt 2,05.

## Patentansprüche

1. Fällungskieselsäure, **gekennzeichnet durch**
BET-Oberflächen ≥ 135 m²/g
CTAB-Oberflächen ≥ 75 m²/g
wobei das Verhältnis BET/CTAB-Oberflächen ≥ 1.7 ist.

2. Fällungskieselsäure nach Anspruch 1,
**dadurch gekennzeichnet,**
**dass** die BET-Oberfläche maximal 600 m²/g beträgt.

3. Fällungskieselsäure nach Anspruch 1,
**dadurch gekennzeichnet,**
**dass** die CTAB-Oberfläche maximal 350 m²/g beträgt.

4. Fällungskieselsäure nach einem der Ansprüche 1 bis 3,
**dadurch gekennzeichnet,**
**dass** die Fällungskieselsäuren eine DBP-Aufnahme von 100-350 g/100 g aufweisen.

5. Fällungskieselsäure nach einem der Ansprüche 1 bis 4,
**dadurch gekennzeichnet,**
**dass** die Fällungskieselsäure einen wk-Koeffizient von ≤ 3.4 (Verhältnis der Peakhöhe der durch Ultraschall nicht abbaubaren Partikel im Größenbereich 1,0 - 100 µm zur Peakhöhe der abgebauten Partikel im Größenbereich < 1,0 µm) aufweist.

6. Fällungskieselsäuren nach einem der Ansprüche 1 bis 5,
**dadurch gekennzeichnet,**
**dass** ihre Oberflächen mit Organosilanen der Formel I bis III
[R¹ ₙ - (RO)₃₋ₙSi - (Alk)ₘ-(Ar)ₚ]_{q}[B] (I),
R¹ ₙ(RO)₃₋ₙSi-(Alkyl) (II),
oder
R¹ ₙ(RO)₃₋ₙSi-(Alkenyl) (III),
modifiziert sind, in denen bedeuten
B: -SCN, -SH, -Cl, -NH₂ (wenn q = 1) oder -Sx-(wenn q = 2),
R und R¹: eine Alkylgruppe mit 1 bis 4 Kohlenstoffatomen, den Phenylrest, wobei alle Reste R und R¹ jeweils die gleiche oder eine verschiedene Bedeutung haben können,
R: eine C₁ bis C₄-Alkyl, -C₁ bis C₄-Alkoxygruppe,
n: 0; 1 oder 2,
Alk: einen zweiwertigen linearen oder verzweigten Kohlenwasserstoffrest mit 1 bis 18 Kohlenstoffatomen,
m: 0 oder 1,
Ar.: einen Arylenrest mit 6 bis 12 C-Atomen, bevorzugt mit 6 C-Atomen,
p: 0 oder 1 mit der Maßgabe, dass p und n nicht gleichzeitig 0 bedeuten,
x: eine ganze Zahl von 2 bis 8,
Alkyl: einen einwertigen linearen oder verzweigten gesättigten Kohlenwasserstoffrest mit 1 bis 20 Kohlenstoffatomen, bevorzugt 2 bis 8 Kohlenstoffatomen,
Alkenyl: einen einwertigen linearen oder verzweigten ungesättigten Kohlenwasserstoffrest mit 2 bis 20 Kohlenstoffatomen, bevorzugt 2 bis 8 Kohlenstoffatomen,
q: 1 oder 2.

7. Verfahren zur Herstellung einer Fällungskieselsäure mit einer
BET-Oberflächen ≥ 135 m²/g
CTAB-Oberflächen ≥ 75 m²/g
und einer
mit einem Verhältnis der BET-/CTAB-Oberflächen ≥ 1.7, wobei
a) eine wässrige Wasserglaslösung vorgelegt wird
b) in diese Vorlage unter Rühren bei 55 - 95 °C für 10-60 Minuten gleichzeitig Wasserglas und Schwefelsäure dosiert,
c) die Zudosierung für 30-90 Minuten unter Einhaltung der Temperatur gestoppt,
d) bei gleicher Temperatur unter Rühren für 20-80 Minuten gleichzeitig Wasserglas und Schwefelsäure zudosiert
e) mit Schwefelsäure auf einen pH-Wert von ca. 3,5 angesäuert und
f) filtriert und getrocknet wird.

8. Verfahren nach Anspruch 7,
**dadurch gekennzeichnet,**
**dass** die in den Schritten b) und d) zugeführten Komponenten jeweils eine gleiche oder unterschiedliche Konzentration aufweisen.

9. Verfahren nach Anspruch 7 oder 8,
**dadurch gekennzeichnet,**
**dass** die in den Schritten b) und d) zuführten Komponenten jeweils eine gleiche oder unterschiedliche Zulaufgeschwindigkeit aufweisen.

10. Verfahren nach Anspruch 9,
**dadurch gekennzeichnet,**
**dass** bei gleicher Konzentration der Komponenten in den Schritten b) und d) die Zulaufgeschwindigkeit in Schritt d) 125 - 140 % der Zulaufgeschwindigkeit in Schritt b) beträgt.

11. Verfahren nach einem der Ansprüche 7 bis 10,
**dadurch gekennzeichnet,**
**dass** zur Trocknung ein Sprühtrockner, Etagentrockner, Flash-Trockner oder Spin-Flash-Trockner eingesetzt wird.

12. Verfahren nach einem der Ansprüche 7 bis 11,
**dadurch gekennzeichnet,**
**dass** neben der Trocknung eine Granulation mit einem Walzenkompaktor durchgeführt wird.

13. Verfahren nach einem der Ansprüche 7 bis 12,
**dadurch gekennzeichnet,**
**dass** man die Fällungskieselsäuren mit Organosilanen in Mischungen von 0,5 bis 50 Teilen, bezogen auf 100 Teile Fällungskieselsäure, insbesondere 1 bis 15 Teile, bezogen auf 100 Teile Fällungskieselsäure modifiziert, wobei die Reaktion zwischen Fällungskieselsäure und Organosilan während der Mischungsherstellung (in situ) oder außerhalb durch Aufsprühen und anschließendes Tempern der Mischung oder durch Mischen des Silans und der Kieselsäuresuspension mit anschließender Trocknung und Temperung durchgeführt wird.

14. Vulkanisierbare Kautschukmischungen und Vulkanisate, die die Fällungskieselsäure gemäß einem der Ansprüche 1 bis 6 enthalten.

15. Reifen, enthaltend Fällungskieselsäure nach einem der Ansprüche 1 bis 6.
